# EUROPÄISCHE PATENTANMELDUNG

(11) **EP 2 592 042 A1**
(43) Veröffentlichungstag der Anmeldung: **15.05.2013**
(21) Anmeldenummer: 11008978.6
(22) Anmeldetag: 11.11.2011
(51) Int. Cl.: B66F 9/12, E02F 3/36, A01B 59/06, B66F 9/065

(54) **Trageinrichtung für Lastaufnahmemittel sowie Adapter für Trageinrichtung**

(71) Anmelder: Vetter Umformtechnik GmbH, 57299 Burbach (DE)
(72) Erfinder: Vetter, Arnold, 57234 Wilnsdorf (DE); Weyl, Tobias, 57290 Neunkirchen (DE)
(74) Vertreter: Grosse, Wolf-Dietrich Rüdiger

(57) **Zusammenfassung**

Eine Trageinrichtung (1) für zumindest ein Lastaufnahmemittel, insbesondere für ein oder mehrere Gabelzinken, Halteteile oder Tragdorne für eine Bagger- oder Räumschaufel, eine Greifzange, einen Tragkorb oder ähnliches, wobei die Trageinrichtung (1) einen Tragrahmen aus mindestens einem oberen Querträger (2), einem unteren Querträger (3) sowie zwei über die Querstreckung des Tragrahmens beabstandete Halteteile (4,5) zur Abstützung des oder der Lastaufnahmemittel umfasst, und wobei der Tragrahmen an einem Fahrzeug, insbesondere einer Bau- oder Landmaschine, über mindestens einen fahrzeugseitigen Arm lösbar halterbar ist. An jedem Halteteil (4,5) sind mindestens zwei Anschlussstellen (6,7) für eine Vierpunktaufnahme des Tragrahmens an den fahrzeugseitigen Armen ausgebildet, und jedes Halteteil (4,5) weist mindestens ein Anschlusselement (Unterlenkerbolzen 18,19) auf, das zusammen mit einem den oberen Querträger (2) und den unteren Querträger (3) mittig verbindenden Halteelement (11), welches ein weiteres Anschlusselement (Oberlenkerbolzen 14) besitzt, eine alternativ verwendbare Dreipunktaufnahme des Tragrahmens an weiteren fahrzeugseitigen Armen bildet.

## Beschreibung

Die Erfindung betrifft eine Trageinrichtung für zumindest ein Lastaufnahmemittel, insbesondere für ein oder mehrere Gabelzinken, Halteteile oder Tragdorne für eine Bagger- oder Räumschaufel, eine Greifzange, einen Tragkorb oder ähnliches, wobei die Trageinrichtung einen Tragrahmen aus mindestens einem oberen Querträger, einem unteren Querträger sowie zwei über die Quererstreckung des Tragrahmens beabstandete Halteteile zur Abstützung des oder der Lastaufnahmemittel umfasst, und wobei der Tragrahmen an einem Fahrzeug, insbesondere an einer Bau- oder Landmaschine, über einen mindestens einen fahrzeugseitigen Arm lösbar halterbar ist. Die Erfindung betrifft weiterhin Adapter für eine Trageinrichtung, welche an jedem Halteteil mindestens zwei Anschlussstellen aufweist.

Es ist bekannt, die erwähnten oder andere Lastaufnahmemittel an einem Tragrahmen auswechselbar zu halten. Ein solcher Tragrahmen ist vorteilhaft nach der Norm ISO 23206 ausgebildet und umfasst nicht nur obere und untere Verbindungsmöglichkeiten zu dem oder den ansetzbaren Lastaufnahmemittel(n), sondern kann auch selbst rückseitige Anschlussstellen insbesondere gemäß der genannten Norm aufweisen, über die er in seiner Funktionsstellung von beweglichen Armen eines Fahrzeugs gehalten sein kann, zum Beispiel von hydraulisch verschwenkbaren Armen eines Traktors oder einer anderen Landmaschine oder Baumaschine. Auch die insoweit rückseitigen Anschlussstellen, über die der Tragrahmen mit den Armen verbindbar ist und von diesen bei passender Ausbildung in einem Parallelhub ohne Verkippen angehoben oder abgesenkt und ggf. auch um eine Horizontalachse verschwenkt werden kann, sind genormt und ragen aus einer vertikalen Ebene, in der der dem zumindest einen Lastaufnahmemittel zugewandte Teil des Tragrahmens erstreckt ist, rückwärtig heraus.

Eine derartige Trageinrichtung ist auch durch die EP 2 347 990 A1 bekannt geworden. Neben der auch Eurolandmaschinenträger genannten Trageinrichtung nach der ISO 23206, die eine Vierpunktaufhängung zum Koppeln mit einer Vierpunktaufnahme vorzugsweise am Frontlader eines Traktors aufweist, sind auch Trageinrichtungen mit Dreipunktaufhängung, meistens für am Heck der Landmaschine angeordnete Dreipunktaufnahmen, nach der ISO 730 bekannt. Die Dreipunktaufhängung ist für einen an der Landmaschine angeordneten Oberlenker sowie zwei an der Landmaschine angeordnete Unterlenker konzipiert. Auch diese Trageinrichtungen dienen dazu, z.B. Gabeln oder dergleichen zu halten, mittels derer beispielsweise Heu- oder Silageballen am Heck eines Traktors transportiert werden können.

Um sowohl am Frontlader als auch am Heck entsprechende Trageinrichtungen ankoppeln zu können, müssen somit eine Trageinrichtung mit Vierpunktaufhängung für den Frontlader als auch eine Trageinrichtung mit Dreipunktaufhängung für das Heck des Traktors bevorratet werden.

Der Erfindung liegt die Aufgabe zugrunde, eine Trageinrichtung so auszugestalten, dass sie entweder mit einer Vierpunktaufhängung oder aber mit einer Dreipunktaufhängung betrieben werden kann bzw. Mittel aufzuzeigen, durch die eine Trageinrichtung problemlos von einer Vierpunktaufhängung auf eine Dreipunktaufhängung umrüstbar ist.

Zur Lösung der Aufgabe wird vorgeschlagen, dass an jedem Halteteil mindestens zwei Anschlussstellen für eine Vierpunktaufnahme des Tragrahmens an den fahrzeugseitigen Armen ausgebildet sind und dass jedes Halteteil mindestens ein Anschlusselement aufweist, die zusammen mit einem den oberen Querträger und den unteren Querträger mittig verbindenden Halteelement, welches ein weiteres Anschlusselement besitzt, eine alternativ verwendbare Dreipunktaufnahme des Tragrahmens an weiteren fahrzeugseitigen Armen bildet.

Damit ist gewährleistet, dass die Trageinrichtung sowohl an eine Vierpunktaufnahme einer Bau- bzw. Landmaschine oder aber an eine Dreipunktaufnahme der entsprechenden Maschinen angeflanscht werden kann.

Von Vorteil ist, wenn die Anschlussstellen für die Vierpunktaufnahme gemäß ISO 23206 am Tragrahmen beabstandet sind und / oder wenn die Anschlusselemente für die Dreipunktaufnahme gemäß ISO 730 am Tragrahmen beabstandet sind.

Damit weisen die Anschlussstellen bzw. Anschlusselemente Abstände zueinander und Abmessungen auf, die genormt sind, so dass ein Anflanschen an genormte Frontlader bzw. Heck-Dreipunktaufnahmen problemlos möglich sind.

Bemerkenswert ist, dass die Anschlusselemente für die Dreipunktaufnahme lösbar mit dem Tragrahmen verbunden sind.

Damit lässt sich z. B. das Halteelement von der Trageinrichtung abnehmen, wenn diese an eine Vierpunktaufnahme angekoppelt wird. Durch das Entfernen des Halteelements ergibt sich eine freiere Sicht auf die an der Trageinrichtung z. B. angeordneten Gabelzinken. Wenn die unteren Anschlussstellen von der Trageinrichtung entfernt sind, können diese, wenn die Trageinrichtung an einer Vierpunktaufnahme betrieben wird, nicht beschädigt werden. Hinzu kommt, dass die lösbaren Teile schnell und problemlos gegen Ersatzteile ausgetauscht werden können.

Es empfiehlt sich, dass das Halteelement einem Gabelrücken entsprechend ausgebildet ist und einen oberen sowie einen unteren Gabelhaken aufweist, wobei mindestens einer der Gabelhaken eine Arretierungsvorrichtung besitzt, und dass am oberen Ende des Halteelements zwei beabstandete Flansche vorgesehen sind, die mit gegenüberliegenden Bohrungen zur Aufnahme eines der Anschlusselemente dienenden Oberlenkerbolzens versehen sind.

Damit kann das Halteelement für den Oberlenker der Bau- bzw. Landmaschine komplett von der Trageinrichtung entfernt werden. Auch zwischen den oberen und unteren Querträgern bleiben nach Entfernen des Halteelements keine weiteren Elemente, so dass eine optimale Sicht auf das zu transportierende bzw. zu bearbeitende Gut, welches sich auf den an der Trageinrichtung angeordneten Gabeln befindet, gewährleistet ist.

Ist das Halteelement als Vierkantrohr ausgebildet, an dem die Gabelhaken und Flansche angeschweißt sind, so ist eine vom Gewicht und Preis her günstige Lösung des Halteelements verwirklicht. Selbstverständlich könnte das Vierkantrohr an seinem oberen Ende auch so ausgeklinkt sein, dass die Flansche vom Vierkantrohr selbst gebildet werden. Gegenüber einem massiven Halteelement ist vor allem der Vorteil des niedrigeren Gewichts gravierend.

Nachahmenswert ist, dass die den Halteteilen zugeordneten Anschlusselemente aus Unterlenkerbolzen bestehen, die an einem Ende eines Winkelhebels angeordnet sind, wobei die Winkelhebel in ihrem Drehpunkt eine Bohrung zur Aufnahme eines Verbindungselements aufweist, und das jeweils zweite Ende der Winkelhebel eine Stützfläche besitzt, und wobei die Winkelhebel über die Verbindungselemente, welche in die unteren Anschlussstellen der Halteteile einzugreifen vermögen, mit dem Tragrahmen verbindbar sind, wobei sich die Stützflächen an entsprechenden Gegenstützflächen der Halteteile abzustützen vermögen.

Der an den Anschlussstellen der Halteteile befestigte Winkelhebel gewährleistet über die zu den Anschlussstellen außermittige Anordnung, dass die Anschlussstellen im Wesentlichen nur in eine Richtung beansprucht werden. Ein Verdrehen von Bolzen in den Anschlussstellen ist ausgeschlossen. Der Winkelhebel leitet die untere Horizontalkraft über die Stützflächen in die Gegenstützflächen der Halteteile ein. Dadurch werden die unteren Anschlussstellen entlastet

Es wird nicht nur Schutz für die Trageinrichtung in Verbindung mit den ggf. lösbaren Anschlusselementen gesucht, sondern auch für die lösbaren Anschlusselemente in Alleinstellung. Dazu werden Adapter für eine Trageinrichtung nach dem Oberbegriff des Anspruchs 1, welche an jedem Halteteil mindestens zwei Anschlussstellen aufweist, vorgeschlagen. Der Adapter dient somit zum Umbau einer Trageinrichtung mit Vierpunktaufhängung in eine Trageinrichtung mit Dreipunktaufhängung.

Die Erfindung wird anhand einer Zeichnung näher erläutert. Dabei zeigen
- Figur 1: zeigt eine perspektivische Darstellung einer erfindungsgemäßen Trageinrichtung mit einer Vierpunktaufhängung sowie festverbundenem Anschlusselementen für eine Dreipunktaufhängung,
- Figur 2: eine Darstellung der erfindungsgemäßen Trageinrichtung mit lösbaren Anschlusselementen in perspektivischer Darstellung, und
- Figur 3: einen aus drei Teilen bestehenden Adapter für eine Trageinrichtung mit Vierpunktaufhängung.

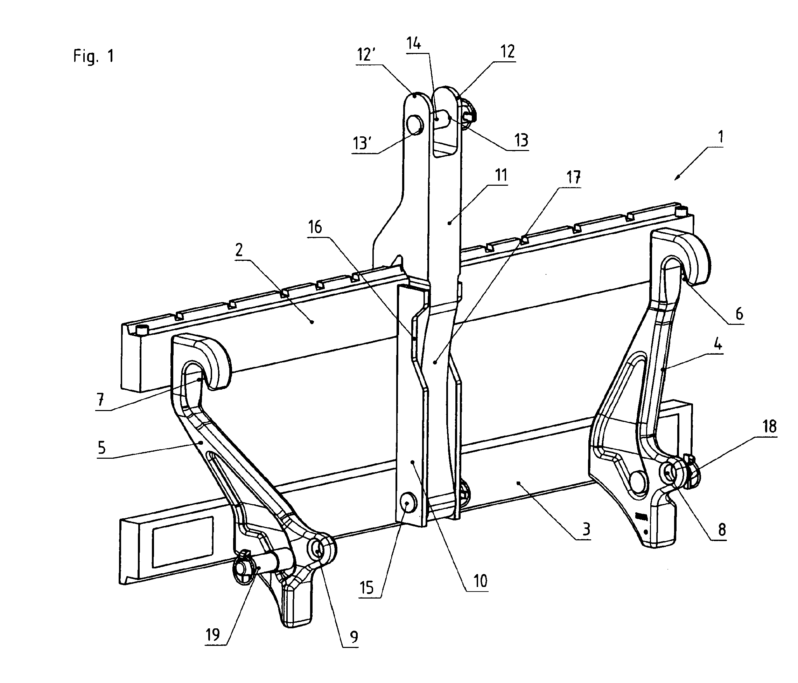

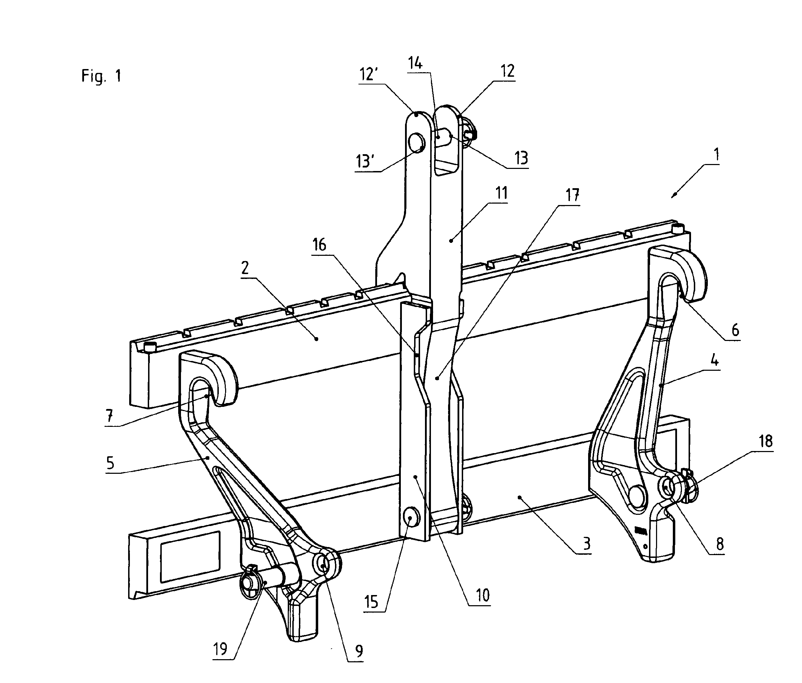

Figur 1 zeigt eine erfindungsgemäße Trageinrichtung 1, bestehend aus einem oberen Querträger 2 und einem unteren Querträger 3, welche über Halteteile 4 und 5 miteinander verbunden sind. Die Halteteile 4 und 5 weisen obere Anschlussstellen 6 und 7 sowie untere Anschlussstellen 8 und 9 auf. Damit ergibt sich eine Trageinrichtung z. B. für Gabeln, die über die vier Anschlussstellen 6 bis 9 an der Vierpunktaufnahme des Frontladers einer Landmaschine, z. B. einem Traktor angeflanscht werden kann.

Weiterhin zeigt die Figur 1 ein mittig zwischen den Halteteilen 4 und 5 angeordnetes Verbindungselement 10. Das Verbindungselement 10 ist fest mit dem oberen Querträger 2 und dem unteren Querträger 3 verbunden, z.B. verschweißt. Das Verbindungselement 10 gibt damit der Trageinrichtung 1 zusätzliche Stabilität. Das Verbindungselement 10 haltert ein Halteelement 11, an dessen oberen Ende zwei Flansche 12, 12' angeordnet sind, die gegenüber liegend Bohrungen 13, 13' aufweisen, in denen ein Oberlenkerbolzen 14 dargestellt ist. Der sicherbare Oberlenkerbolzen 14 dient dazu, den Oberlenker der Dreipunktaufnahme einer Landmaschine aufzunehmen.

Das Halteelement 11 kann fest mit oberem und unterem Querträger 2, 3 verbunden sein, würde in diesem Falle jedoch eine Verschlechterung der Sicht auf den Arbeitsraum bewirken. Daher ist in der Figur 1 das Halteelement 11 von oben auf den oberen Querträger 2 gesetzt und umschießt diesen teilweise. Im unteren Bereich des Halteelementes 11 wird dieses über einen Haltebolzen 15 am Verbindungselement 10 gesichert. Nach Herausnahme des Haltebolzens 15 kann das Halteelement 11 von der Trageinrichtung 1 abgenommen werden.

Damit die Trageinrichtung 1 trotz Verbindungselement 10 und Halteelement 11 dennoch an die Vierpunktaufnahme eines Frontladers angeflanscht werden kann, weisen sowohl das Verbindungselement 10 als auch das Halteelement 11 in Höhe der oberen Anschlussstellen 6 und 7 Ausnehmungen 16 und 17 auf.

An den Halteteilen 4 und 5 sind untere Querlenkerbolzen 18 und 19 angeschweißt. Es besteht selbstverständlich die Möglichkeit, die unteren Querlenkerbolzen 18, 19 auch als Schraubbolzen in die Halteteile 4 und 5 lösbar einzuschrauben.

Damit ist die Trageinrichtung 1 über die oberen Anschlussstellen 6 und 7 sowie die unteren Anschlussstellen 8 und 9 sowohl an eine Vierpunktaufnahme anschließbar als auch über den Oberlenkerbolzen 14 und die Unterlenkerbolzen 18 und 19 an eine Dreipunktaufnahme anflanschbar.

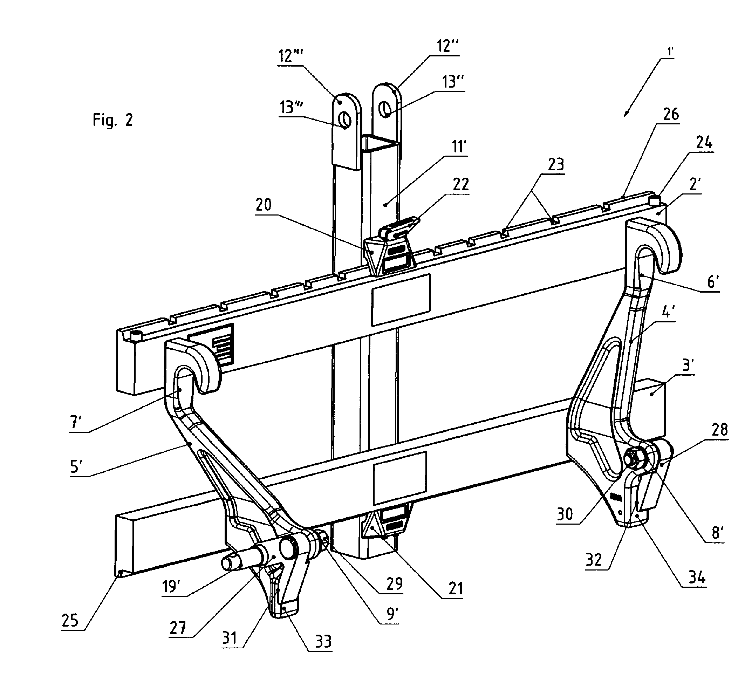

Figur 2 zeigt eine Trageinrichtung 1', bestehend aus dem oberen Querträger 2' und unterem Querträger 3', dem Halteteil 4' sowie dem Halteteil 5'. Das Halteelement 11' ist als Rohr ausgebildet, an dem ein oberer Gabelhaken 20 sowie ein unterer Gabelhaken 21 angeschweißt sind. Der obere Gabelhaken 20 weist eine Arretiervorrichtung 22 auf, die in eine am oberen Querträger 1' dargestellte Verzahnung 23 eingreift. Dabei ist die Arretiervorrichtung 22 in die mittlere Vertiefung der Verzahnung 23 des oberen Querträgers 2' eingerastet. Am oberen Ende des Halteelements 11' sind zwei Flansche 12", 12"' angeschweißt, die gegenüber liegende Bohrungen 13", 13"' für einen nicht dargestellten Oberlenkerbolzen aufweisen.

Das Halteelement 11' ist nach Entfernung einer Verliersicherung 24 auf den oberen Querträger 2' und unteren Querträger 3' geschoben worden, wobei der obere Gabelhaken 20 und der untere Gabelhaken 21 die an den Querträgern 2', 3' angeordneten Halteführungen 25 und 26 umschließen.

Sowohl an der unteren Anschlussstelle 8' als auch an der unteren Anschlussstelle 9' sind Winkelhebel 27 und 28 über Schrauben und Muttern 29 und 30 mit den Halteteilen 4', 5' verbunden. Die Verbindung der Winkelhebel 27, 28 ist in deren Drehpunkt erfolgt. An einem Ende der Winkelhebel 27, 28 weisen diese jeweils Unterlenkerbolzen 18', 19' auf, wobei in der Zeichnung nur der Unterlenkerbolzen 19' erkennbar ist. Die anderen Enden der Winkelhebel 27 und 28 sind als Stützflächen 31, 32 ausgebildet, die sich an Gegenstützflächen 33, 34 der Halteteile 4', 5' abstützen. Durch die Anordnung der Unterlenkerbolzen 18', 19' an den Winkelhebeln 27 und 28 sind die unteren Anschlussstellen 8', 9' entlastet. Die Winkelhebel 27, 28 leiten die unteren Horizontalkräfte über die Stützflächen 31 und 32 in die Gegenstützflächen 33 und 34 der Halteteile 4' und 5' ein. Dadurch werden die unteren Anschlussstellen 8' und 9' entlastet.

Die Schrauben/Mutterverbindungen 29, 30 sind händisch bzw. mit handelsüblichem Werkzeug montierbar und demontierbar, so dass die Unterlenkerbolzen 18', 19' problemlos austauschbar sind.

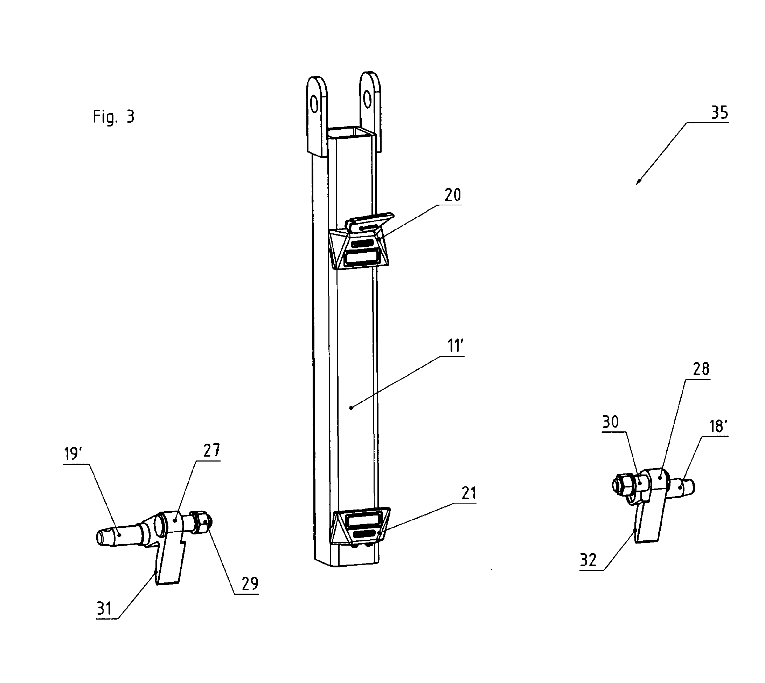

Figur 3 zeigt erfindungsgemäße Adapter 35, bestehend aus dem Halteelement 11' sowie den Winkelhebeln 27 und 28. Die Adapter 35 können getrennt von der Trageinrichtung 1' vertrieben werden und dienen als Nachrüstsatz, um eine Trageinrichtung 1' die eine Vierpunktaufhängung (Anschlussstellen 6 bis 9) aufweist, so umzurüsten, dass die Trageinrichtung 1' eine Dreipunktaufhängung zur Anlenkung an eine Dreipunktaufnahme, z. B. einer Landmaschine aufweist. Das Halteelement 11' kann auf die Halteführungen 25 und 26 (siehe Figur 2) einer Trageinrichtung 1' aufgeschoben werden. Am oberen Ende des Halteelements 11' sind Flansche 12", 12"' angeordnet, die gegenüber liegende Bohrungen 13", 13‴ aufweisen, durch welche ein nicht gezeigter Oberlenkerbolzen gesteckt werden kann. Der Oberlenkerbolzen dient dann zur Aufnahme des Oberlenkers einer Dreipunktaufnahme einer Landmaschine.

Die Winkelhebel 27 und 28 sind über die Schrauben/Mutterverbindungen 29, 30 mit den unteren Anschlussstellen 8' 9' einer eine Vierpunktaufhängung aufweisenden Trageinrichtung 1' verbindbar. An einem Arm der Winkelhebel 27, 28 ist jeweils ein Unterlenkerbolzen 18', 19' befestigt, während der jeweils zweite Hebelarm der Winkelhebel 27, 28 Stützflächen 31, 32 aufweisen, die sich an entsprechenden Gegenstützflächen 33, 34 an den Halteteilen 4', 5' der Trageinrichtung 1' abstützen.

Selbstverständlich können die Unterlenkerbolzen 18, 19 bzw. 18', 19' je nach Anforderung, wie in den Figuren 1 bis 3 gezeigt nach außen, oder aber auch, wie nicht gezeigt, nach innen weisen.

### Bezugszeichenübersicht

- 1: Trageinrichtung
- 2: obere Querträger
- 3: unterer Querträger
- 4: Halteteil
- 5: Halteteil
- 6: obere Anschlussstelle
- 7: obere Anschlussstelle
- 8: untere Anschlussstelle
- 9: untere Anschlussstelle
- 10: Verbindungselement
- 11: Halteelement
- 12: Flansch
- 13: Bohrung
- 14: Oberlenkerbolzen
- 15: Bolzen
- 16: Ausnehmung
- 17: Ausnehmung
- 18: Unterlenkerbolzen
- 19: Unterlenkerbolzen
- 20: oberer Gabelhaken
- 21: unterer Gabelhaken
- 22: Arretiervorrichtung
- 23: Verzahnung
- 24: Verliersicherung
- 25: Halteführung
- 26: Halteführung
- 27: Winkelhebel
- 28: Winkelhebel
- 29: Schraube / Mutter
- 30: Schraube / Mutter
- 31: Stützfläche
- 32: Stützfläche
- 33: Gegenstützfläche
- 34: Gegenstützfläche
- 35: Adapter

## Patentansprüche

1. Trageinrichtung (1; 1') für zumindest ein Lastaufnahmemittel, insbesondere für ein oder mehrere Gabelzinken, Halteteile oder Tragdorne für eine Bagger-oder Räumschaufel, eine Greifzange, einen Tragkorb oder ähnliches, wobei die Trageinrichtung (1; 1') einen Tragrahmen aus mindestens einem oberen Querträger (2; 2'), einem unteren Querträger (3; 3') sowie zwei über die Querstreckung des Tragrahmens beabstandete Halteteile (4, 5; 4',5') zur Abstützung des oder der Lastaufnahmemittel umfasst, und wobei der Tragrahmen an einem Fahrzeug, insbesondere einer Bau- oder Landmaschine, über mindestens einen fahrzeugseitigen Arm lösbar halterbar ist,
**dadurch gekennzeichnet,**
**dass** an jedem Halteteil (4, 5; 4',5') mindestens zwei Anschlussstellen (6, 7; 6', 7') für eine Vierpunktaufnahme des Tragrahmens an den fahrzeugseitigen Armen ausgebildet sind, und dass jedes Halteteil (4, 5; 4',5') mindestens ein Anschlusselement (Unterlenkerbolzen 18, 19; 18', 19') aufweist, die zusammen mit einem den oberen Querträger (2; 2') und den unteren Querträger (3; 3') mittig verbindenden Halteelement (11; 11'), welches ein weiteres Anschlusselement (Oberlenkerbolzen 14) besitzt, eine alternativ verwendbare Dreipunktaufnahme des Tragrahmens an weiteren fahrzeugseitigen Armen bildet.

2. Trageinrichtung nach Anspruch 1,
**dadurch gekennzeichnet,**
**dass** die Anschlussstellen (6 bis 9; 6' bis 9') für die Vierpunktaufnahme gemäß ISO 23206 am Tragrahmen beabstandet sind und / oder dass die Anschlusselemente (Oberlenkerbolzen 14, Unterlenkerbolzen 18, 19) für die Dreipunktaufnahme gemäß ISO 730 am Tragrahmen beabstandet sind.

3. Trageinrichtung nach Anspruch 1 oder 2,
**dadurch gekennzeichnet,**
**dass** die Anschlusselemente für die Dreipunktaufnahme lösbar mit dem Tragrahmen verbunden sind.

4. Trageinrichtung nach Anspruch 3,
**dadurch gekennzeichnet,**
**dass** das Halteelement (11') einem Gabelrücken entsprechend ausgebildet ist und einen oberen Gabelhaken (20) sowie einen unteren Gabelhaken (21) aufweist, wobei mindestens einer der Gabelhaken (20) eine Arretierungsvorrichtung (22) besitzt und dass am oberen Ende des Halteelements (11') zwei beabstandete Flansche (12", 12"') vorgesehen sind, die mit gegenüber liegenden Bohrungen (13", 13"') zur Aufnahme eines als Anschlusselement dienenden Oberlenkerbolzens (14) versehen sind.

5. Trageinrichtung nach Anspruch 4,
**dadurch gekennzeichnet,**
**dass** das Halteelement (11') als Vierkantrohr ausgebildet ist, an dem die Gabelhaken (20, 21) und Flansche (12", 12‴) angeschweißt sind.

6. Trageinrichtung nach einem der Ansprüche 3 bis 5,
**dadurch gekennzeichnet,**
**dass** die den Halteteilen (4', 5') zugeordneten Anschlusselemente aus Unterlenkerbolzen (18', 19') bestehen, die an einem Ende eines Winkelhebels (27, 28) angeordnet sind, wobei jeder Winkelhebel (27, 28) im Drehpunkt eine Bohrung zur Aufnahme eines Verbindungselements (Schraube/ Mutter 29, 30) aufweist, und das zweite Ende jedes Winkelhebels (27, 28) eine Stützfläche (31, 32) besitzt, und wobei jeder Winkelhebel (27, 28) über sein Verbindungselement, welche in die unteren Anschlussstellen (8', 9') der Halteteile (4', 5') einzugreifen vermögen, mit dem Tragrahmen verbindbar ist, wobei sich im verbundenen Zustand die Stützflächen (31, 32) an entsprechenden Gegenstützflächen (33, 34) der Halteteile (4', 5') abzustützen vermögen.

7. Adapter (35) für eine Trageinrichtung (1') nach dem Oberbegriff des Anspruchs 1 welche an jedem Halteteil (4', 5') mindestens zwei Anschlussstellen (6' bis 9') aufweist,
**gekennzeichnet durch**,
ein den oberen Querträger (2') und den unteren Querträger (3') mittig verbindendes lösbares Halteelement (11'), welches ein Anschlusselement besitzt, und/oder je einen Winkelhebel (27, 28) der in seinem Drehpunkt eine Bohrung zur Aufnahme eines Verbindungselements aufweist, welche in die unteren Anschlussstellen (8', 9') der Halteteile (4', 5') einzugreifen vermögen, wobei an einem Ende jedes Winkelhebels (27, 28) ein als weitere Anschlusselemente dienender Unterlenkerbolzen (18', 19') vorgesehen ist, und das zweite Ende jedes Winkelhebels (27, 28) eine Stützfläche (31, 32) besitzt, wobei sich die Stützflächen (31,32) an entsprechenden Gegenstützflächen (33, 34) der Halteteile (4', 5') abzustützen vermögen.

8. Adapter (35) nach Anspruch 7,
**dadurch gekennzeichnet,**
**dass** das Halteelement (11') einem Gabelrücken entsprechend ausgebildet ist und einen obere sowie einen unteren Gabelhaken (20, 21) aufweist, wobei mindestens einer der Gabelhaken (20) eine Arretierungsvorrichtung (22) besitzt und dass am oberen Ende des Halteelements (11) zwei beabstandete Flansche (12", 12‴) vorgesehen sind, die mit gegenüber liegenden Bohrungen (13", 13‴) zur Aufnahme eines als Anschlusselement dienenden Oberlenkerbolzens (14) versehen sind.
